# EUROPÄISCHE PATENTSCHRIFT

(11) **EP 3 687 007 B1**
(45) Veröffentlichungstag und Bekanntmachung des Hinweises auf die Patenterteilung: **16.06.2021**
(21) Anmeldenummer: 19153208.4
(22) Anmeldetag: 23.01.2019
(51) Int. Cl.: H01R 24/76, H01H 23/14, H01H 1/58, H02G 3/14, H01R 4/48, H01R 103/00, H02G 3/12

(54) **ELEKTROINSTALLATIONSGERÄT MIT LÖSEHEBEL**
ELECTRICAL INSTALLATION APPARATUS WITH RELEASE LEVER
APPAREIL D'INSTALLATION ÉLECTRIQUE À LEVIER DE LIBÉRATION

(43) Veröffentlichungstag der Anmeldung: 29.07.2020
(73) Patentinhaber: Gira Giersiepen GmbH & Co. KG, 42477 Radevormwald (DE)
(72) Erfinder: KALINKE, Jens, 42499 Hückeswagen (DE)
(74) Vertreter: Patent- und Rechtsanwälte Dr. Solf & Zapf

(56) Entgegenhaltungen:
- EP-A2- 2 117 023
- EP-B1- 3 107 111
- WO-A1-2015/036933

## Beschreibung

Die Erfindung betrifft ein Elektroinstallationsgerät wie Schalter oder Taster, zur Montage in eine Einbauöffnung in einer Montagerichtung, aufweisend ein Sockelteil mit mindestens einer Aufnahme in der ein Kontaktgehäuse angeordnet ist, wobei das Kontaktgehäuse eine Klemmfeder zum Einklemmen mindestens einer elektrischen Leitung aufweist, wobei ein schwenkbarer Lösehebel außerhalb einer Außenwand des Sockelteils, die parallel zur Montagerichtung im Bereich der Aufnahme verläuft, angeordnet ist, wobei in einer Grundstellung des Lösehebels eine in das Kontaktgehäuse eingeführte elektrische Leitung mit der Klemmfeder des Kontaktgehäuses fixiert wird, wobei in einer Lösestellung des Lösehebels die Klemmfeder betätigt wird und den elektrischen Leiter freigibt, wobei der Lösehebel auf einer, der Außenseite des Sockelteils zugewandten, Unterseite einen Dorn aufweist, wobei im Bereich des Dorns eine Ausnehmung in der Außenwand angeordnet ist, und wobei der Dorn, die Ausnehmung, das Kontaktgehäuse und die Klemmfeder so angeordnet sind, dass in der Lösestellung des Lösehebels der Dorn durch die Ausnehmung die Klemmfeder des Kontaktgehäuses zur Freigabe des elektrischen Leiters betätigt.

WO 2015/036933 A1 offenbart eine Vorrichtung für ein elektrisches Verdrahtungssystem.

EP 2 117 023 A2 offenbart eine Verriegelung für Schnellverbindungstaste in elektrischen Mechanismen.

In der EP 3 107 111 B1 ist ein Elektroinstallationsgerät mit Sockelunterteil und Lösehebel offenbart. Der Lösehebel ist hierbei in einer ersten Ausführung als eine durchgehende Platte mit einem Schlitz im Bereich des Dorns ausgeprägt. Die Platte liegt bei vollständiger Eindrückung nur mit dem Ende des Lösehebels gegen die Außenwand an. Durch die Schrägstellung der Platte entsteht beim starken Eindrücken ein Hohlraum zwischen Platte und Außenwand. Da der Kraftaufwand für das Eindrücken beachtlich ist, kann die Platte brechen, was nachteilig ist.

Die in dieser Anmeldung offenbarte zweite Ausführung weist einen Lösehebel auf, der ebenfalls beim Eindrücken am freien Ende an der Außenwand anliegt. Auch dieser Lösehebel hat eine Schrägstellung und kann bei zu starkem Eindrücken in der Mitte brechen. Das Brechen wird begünstigt durch den Abstand, den ein Teil des Lösehebels zur Außenwand aufweist. Weiterhin ist die Einbringung des Schlitzes in den Lösehebel nachteilig. Im Spritzgussverfahren wird durch die Einführung eines zusätzlichen Leitelements für die Schmelze die Anströmung der Schmelze für den Dorn verbessert. Allerdings ist beim Entformen des Spritzgussteils als zusätzlicher Schritt das Herausziehen der Leitelemente notwendig, was zeitaufwändig ist. Zusätzlich verschleißt die Form durch die Bewegung der Leitelemente schneller und besitzt daher eine geringere Lebensdauer.

Weiterhin ist es möglich, den über ein Filmscharnier mit dem Sockel verbundenen Lösehebel beim Herausziehen so zu überstrecken, dass das Filmscharnier bricht und der Lösehebel abfällt, was sehr nachteilig ist.

In der EP 3 093 937 B1 sind dieselben Lösehebel wie in der EP 3 107 111 B1 offenbart und zeigen daher auch dieselben oben aufgeführten Nachteile.

Der Erfindung liegt die Aufgabe zugrunde, die oben beschriebenen Nachteile zu beheben, insbesondere die Verhinderung des Abfallens oder Brechens des Lösehebels. Bevorzugt stellt sich zusätzlich die Aufgabe, die Bedienung zu verbessern und die Herstellungszeiten zu verkürzen.

Die Aufgabe wird erfindungsgemäß durch ein Elektroinstallationsgerät mit den Merkmalen des Anspruchs 1 gelöst. Dadurch, dass der Dorn einen vom Dorn abstehenden Rastansatz aufweist, wobei sich der Rastansatz in einer Grundstellung ohne eingeführten elektrischen Leiter innerhalb des Sockelteils befindet und mit einem Teil des Randes der Außenwand im Bereich der Ausnehmung rastend in Wirkverbindung steht, wobei die Wirkverbindung ein Austreten des Rastansatzes aus dem Sockelteil verhindert, wird ein Überstrecken des Lösehebels vermieden. Damit ist das Risiko eines Abbrechens des Lösehebels sehr stark reduziert, da nur mit sehr großem und ausgesprochen unüblichen Kraftaufwand die Rastverbindung überwunden werden kann. So wird durch die Reduzierung der Bewegung des Lösehebels mittels der Rastverbindung ein effektiver Schutz vor dem Überstrecken des Lösehebels und damit vor dem Abfallen des Lösehebels gewährleistet.

In einer vorteilhaften Ausführung der Erfindung verläuft in der Lösestellung mindestens ein Teil der Unterseite des Lösehebels, der sich vom Dorn zum freien Ende erstreckt, zur Außenwand des Sockelteils flächig parallel. Das hat den Vorteil, dass der Lösehebel mit einem Fingernagel, der in einen Spalt zwischen Außenwand und Lösehebel eingeführt werden kann, aus der Lösestellung in die Grundstellung bewegt werden kann. Der Spalt zwischen Außenwand und Lösehebel ist so gering, dass mit Druck auf den Lösehebel dieser sich insbesondere elastisch verformen und sich dann an der Außenwand abstützen kann. Damit erfolgt eine Begrenzung des Hebelweges und schlussfolgernd kein Brechen des Lösehebels selbst bei einem hohen Kraftaufwand, der für die Lösestellung unter Umständen erforderlich ist.

In einer weiteren vorteilhaften Ausführung der Erfindung weist der Lösehebel auf seiner flächigen, vom Sockelteil abgewandten Oberseite mehrere in Querrichtung zur Montagerichtung verlaufende, beabstandete Vorsprünge als Riffelung auf, wodurch auf vorteilhafte Weise ein Abrutschen der Betätigungsmitte, z. B. Finger, auch bei auftretendem Schweiß oder dem Gebrauch von Handschuhen verhindert und dadurch die Betätigung in Sachen Handhabung und Arbeitssicherheit verbessert werden.

Insbesondere kann der Abstand der Vorsprünge im Bereich von 1 bis 3 mm, die Höhe der Vorsprünge im Bereich von 0,5 bis 2 mm und die Vorsprünge im Teil zwischen Dorn und freiem Ende des Lösehebels liegen. Das hat den Vorteil, dass durch die Riffelung der Lösehebel auch mit einem spitzen Gegenstand, wie z.B. einem Schraubendreher betätigt werden kann. Damit ist eine universelle Betätigung möglich.

Gemäß einer vorteilhaften Ausführung der Erfindung weist der Lösehebel zwei Schenkel auf, wobei sich der erste Schenkel vom Dorn in Richtung Verbindung mit dem Sockelteil, der zur Befestigung des Lösehebels an der Außenwand des Sockelteils dient, erstreckt, und der zweite Schenkel sich vom Dorn in Richtung unbefestigtes Ende des Lösehebels erstreckt, sowie beide Schenkel im Bereich des Dorns zueinander in einem Winkel von 5° bis 20° angeordnet sind und der zweite Schenkel von der Außenwand des Sockelteils weg gerichtet ist. Eine derartige zweischenkelige Ausführung der Lösehebel hat den Vorteil, dass ein vollständiges Eindrücken des Dorns möglich ist, ohne dass der Lösehebel bei dem hohen Kraftaufwand der Betätigung bricht. Weiterhin ist es möglich, das Winkelverhältnis der Schenkel so anzupassen, dass insbesondere der zweite Schenkel in Lösestellung parallel zur Außenwand des Sockelteils verläuft und in einer besonders vorteilhaften Ausführung an dieser anliegt.

Um die Ausnehmung für eine bessere Herstellung ohne Hinterschnitt auszuführen, erstreckt sich, in einer weiteren vorteilhaften Ausführung der Erfindung, die Ausnehmung in der Außenwand des Sockelteils vom Dorn bis einschließlich zum Rand der Außenwand. Dadurch entfällt der Bedarf von Einlegteilen beziehungsweise Schiebern in der Herstellungsform bzw. ein aufwendiger Entformungsprozess.

Vorteilhaft kann die Erfindung derart ausgeführt werden, dass der Lösehebel an der Außenwand des Sockelteils mit zwei seitlich an einem Teil der Ausnehmung angeordneten, elastisch verformbaren Stegen verbunden ist. Das hat den Vorteil, dass die Fertigung, insbesondere mittels Spritzgießens, verbessert wird, indem der Zugang zum Dorn vereinfacht wird. Dadurch kann der Dorn ohne Hinterschnitt gefertigt werden, wodurch ein aufwändiger Entformungsprozess entfällt.

Eine weitere vorteilhafte Ausführung der Erfindung sieht vor, dass der Dorn auf einer über die Unterseite des Lösehebels, insbesondere über den ersten und zweiten Schenkel des Lösehebels, verlaufenden Rampe angeordnet ist, insbesondere so, dass die Rampe in Montagerichtung zur Außenwand parallel oder vorzugsweise hin zur Außenwand mit schrägen Winkel verläuft. Dadurch wird der Dorn vorteilhaft ohne Hinterschnitt ausgeführt. Weiterhin kann bei der Herstellung des Dorns, insbesondere beim Spritzgießen, eine Form verwendet werden, die ohne zusätzliche bewegliche Leitelemente auskommt. Damit ist es möglich, den Entformungsprozess nur durch das Auseinanderziehen der beiden korrespondierenden Herstellungsformen umzusetzen.

Erfindungsgemäß sind der Lösehebel und das Sockelteil einstückig geformt, wodurch mit Vorteil ermöglicht wird, dass bei der Montage nur noch ein Bauteil montiert werden muss, so dass es gegenüber einer Montage von mehrstückigen Bauteilen zu einer Zeitersparnis und einer Aufwandsersparnis kommt.

In einer weiteren alternativen vorteilhaften Ausführung der Erfindung ist in einer Werksstellung der Lösehebel so angeordnet, dass der Dorn des Lösehebels über eine Sollbruchstelle mit einem Teil des Randes der Ausnehmung in der Außenwand des Sockelteils verbunden ist, wobei der Lösehebel in der Werksstellung nach einem erstmaligen Eindrücken des Lösehebels in die Grundstellung übergeht. Dadurch wird der Lösehebel vor der Montage, d. h. während der Lagerung, in einer vorbestimmten Position gehalten.

Weitere vorteilhafte Ausgestaltungen der Erfindung ergeben sich aus der folgenden Figurenbeschreibung und den abhängigen Unteransprüchen.

Es zeigen:
- Fig. 1: eine Ansicht einer ersten Ausführungsform eines Elektroinstallationsgerätes in Explosionsdarstellung,
- Fig. 2: eine Schnittdarstellung einer weiteren Ausführungsform durch das Sockelteil mit Lösehebel in einer Grundstellung,
- Fig. 3: eine Schnittdarstellung durch das Sockelteil gemäß Fig. 2 mit Lösehebel in einer Lösestellung,
- Fig. 4: eine Schnittdarstellung durch das Sockelteil gemäß Fig. 2 mit Lösehebel in einer Werkstellung,
- Fig. 5: eine Schnittdarstellung eines Sockelteils gemäß Fig. 2 mit eingesetztem Kontaktgehäuse und Klemmfeder in Grundstellung,
- Fig. 5a: eine Detailansicht des Bereichs A, gemäß Fig. 5,
- Fig. 6: eine Schnittdarstellung eines Sockelteils gemäß Fig. 2 mit eingesetztem Kontaktgehäuse und Klemmfeder beim Übergang in Lösestellung,
- Fig. 6a: eine Detailansicht des Bereichs B, gemäß Fig. 6 und
- Fig. 7: eine Detailansicht des Bereichs C, gemäß Fig. 4.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

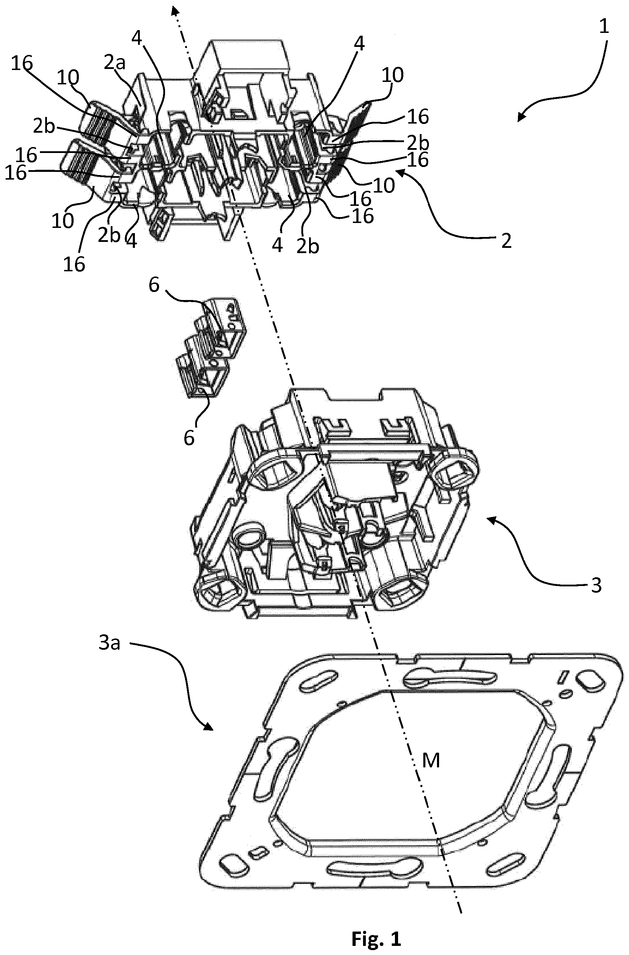

Figur 1 zeigt eine Ausführung eines erfindungsgemäßen Elektroinstallationsgerätes 1, beispielsweise ein Schalter oder ein Taster, zur Montage in eine Einbauöffnung. Das Elektroinstallationsgerät 1 weist ein Sockelteil 2 auf, das vorzugsweise mit einem Sockeloberteil 3 zu einem Sockel zusammengefügt wird. Infolgedessen kann insbesondere der zusammengefügte Sockel an einem Tragring 3a befestigt werden. Das Sockeloberteil 3 weist insbesondere Ausprägungen auf, die für den Einsatz von nicht dargestellten Bedienelementen ausgebildet sind, so dass das Elektroinstallationsgeräts 1 insbesondere als Schalter oder Taster angepasst ist.

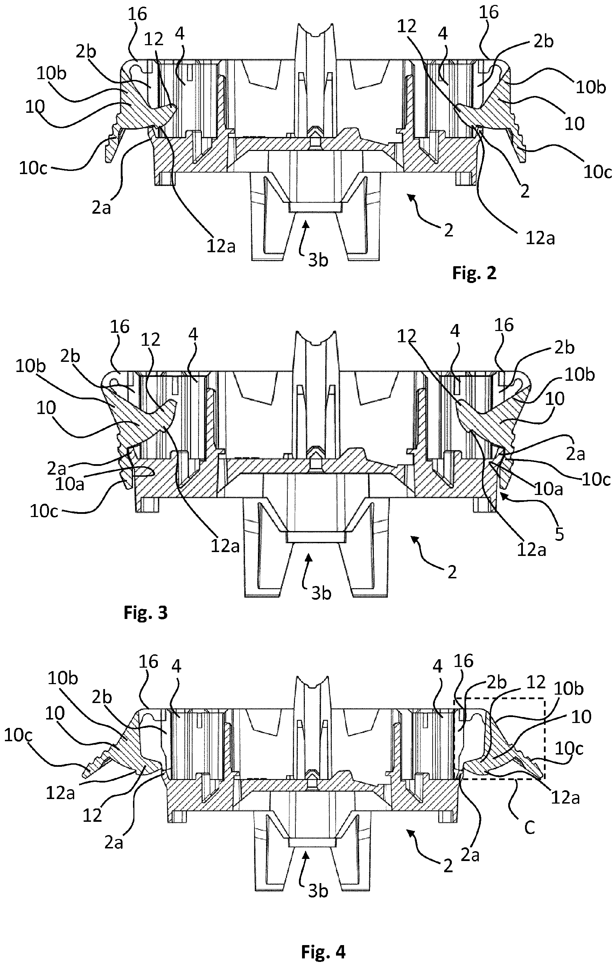

Die in Figur 1 dargestellte Ausführungsform des Elektroinstallationsgerätes 1 wird insbesondere mittels Schrauben in der in der Einbauöffnung eingesetzten Einbaulage gehalten. Eine alternative Ausführung, welche insbesondere in den Figuren 4 bis 6 dargestellt ist, wird vorteilhaft mittels einer Krallenhalterung in der Einbauöffnung gehalten. Die Krallenhalterung weist insbesondere mindestens eine an dem Elektroinstallationsgerät 1 ausgebildete schwenkbare Kralle auf, welche sich mit den Seitenwänden der Einbauöffnung verkrallt und die Entnahme des Elektroinstallationsgerätes 1 verhindert. Vorteilhaft erfolgt die Entnahme eines derartigen Elektroinstallationsgerätes 1 aus der Einbauöffnung, indem die Krallen in eine Entnahmelage versetzt werden, bei welcher die Kralle insbesondere in die in den Figuren 4 bis 6 dargestellte Krallengarage 3b einschwenkt.

In den Figuren 2 bis 6a ist das Sockelteil 2 des erfindungsgemäßen Elektroinstallationsgeräts 1 dargestellt. Das Elektroinstallationsgerät 1 wird in einer in Figur 1 dargestellten Montagerichtung M montiert und weist ein Sockelteil 2 mit mindestens einer Aufnahme 4, in der ein Kontaktgehäuse 6 angeordnet ist, auf. Die Figuren 1 bis 6a zeigen eine vorteilhafte Ausführung der Erfindung, bei welcher das Sockelteil 2 vier Aufnahmen 4 aufweist. Andere Ausführungsformen weisen insbesondere zwei bis sechs Aufnahmen 4 auf. Insbesondere kann die Anzahl der Aufnahmen 4 durch einen vorteilhaften Sockelaufsatz auf bis zu neun Aufnahmen 4 erweitert werden.

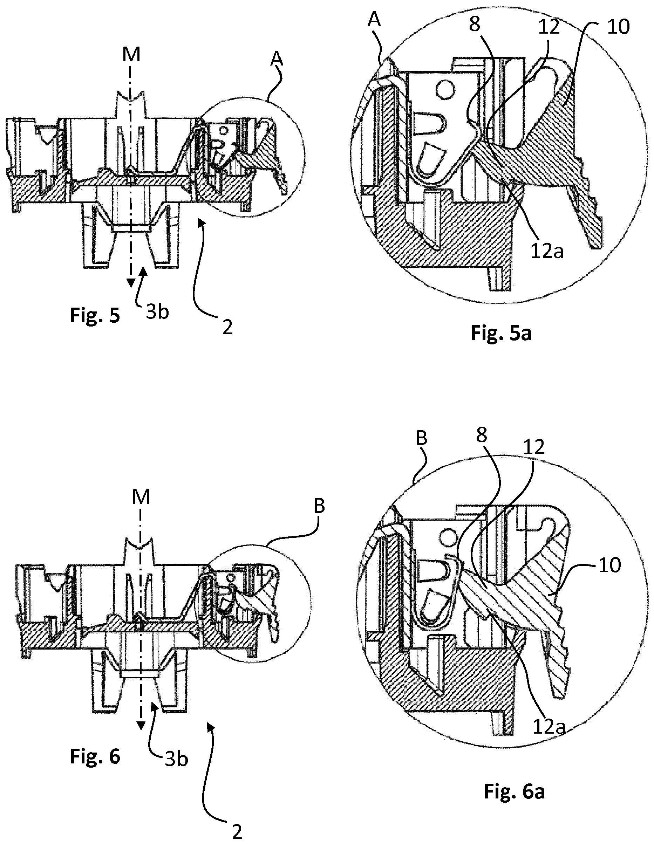

Wie in den Figuren 5 bis 6a dargestellt, weist das Kontaktgehäuse 6 eine Klemmfeder 8 zum Einklemmen mindestens einer, nicht dargestellten, elektrischen Leitung auf, wobei ein schwenkbarer Lösehebel 10 außerhalb einer Außenwand 2a des Sockelteils 2, die parallel zur Montagerichtung M im Bereich der Aufnahme 4 verläuft, angeordnet ist. Zur Veranschaulichung sind die Bereiche der Aufnahmen 4 in den Detailansichten 5a und 6a dargestellt.

In einer Grundstellung des Lösehebels 10, siehe Figuren 2, 5 und 5a, wird erfindungsgemäß eine in das Kontaktgehäuse 6 eingeführte, nicht dargestellte, elektrische Leitung mit der in den Figuren 5 und 5a dargestellten Klemmfeder 8 des Kontaktgehäuses 6 fixiert. Die Fixierung wird dadurch erreicht, dass die Klemmfeder 8 mit einem freien Ende des nicht dargestellten Leiters gegen eine Innenwand des Kontaktgehäuses 6 drückt. In einer Lösestellung des Lösehebels 10, siehe Figuren 3, 6 und 6a, wird die Klemmfeder 8 betätigt, wobei die Klemmfeder 8 den nicht dargestellten elektrischen Leiter freigibt. Zu diesem Zweck weist der Lösehebel 10 auf einer der Außenwand 2a des Sockelteils 2 zugewandten Unterseite 10a einen Dorn 12 auf, wobei im Bereich des Dorns 12 eine Ausnehmung 2b in der Außenwand 2a angeordnet ist. Der Dorn 12, die Ausnehmung 2b, das Kontaktgehäuse 6 und die Klemmfeder 8 sind erfindungsgemäß so angeordnet, dass in der Lösestellung des Lösehebels 10 der Dorn 12 durch die Ausnehmung 2b die Klemmfeder 8 des Kontaktgehäuses 6 zur Freigabe des elektrischen Leiters, wie in den Figuren 6 und 6a dargestellt, betätigt.

Erfindungsgemäß weist der Dorn 12, wie in den Figuren 2 bis 7 dargestellt, einen vom Dorn 12 abstehenden Rastansatz 12a auf, wobei sich der Rastansatz 12a in der Grundstellung, wie in den Figuren 2, 5 und 5a dargestellt, ohne eingeführten elektrischen Leiter innerhalb des Sockelteils 2 befindet und mit einem Teil des Randes der Außenwand 2a im Bereich der Ausnehmung 2b rastend in Wirkverbindung steht, wobei die Wirkverbindung ein Austreten des Rastansatzes 12a aus dem Sockelteil 2 verhindert. So wird durch die Reduzierung der Bewegung des Lösehebels 10 mittels der Rastverbindung ein effektiver Schutz vor dem Überstrecken des Lösehebels 10 und damit vor dem Abfallen des Lösehebels 10 gewährleistet.

In Figur 3 ist eine vorteilhafte Ausführung dargestellt, gemäß welcher in der Lösestellung mindestens ein Teil der Unterseite 10a des Lösehebels 10, der sich vom Dorn 12 zum freien Ende erstreckt, zur Außenwand 2a des Sockelteils 2 flächig parallel verläuft. Dadurch kann sich der Lösehebel 10 bei maximaler Lösestellung vollflächig an der Außenwand 2a abstützen. Dies verhindert eine Beschädigung des Lösehebels 10 durch ein Überdehnen beim Lösevorgang. Zudem wird ein zu starkes Eindrücken der Klemmfeder 8 verhindert.

Damit erfolgt eine Begrenzung des Hebelweges und schlussfolgernd kein Brechen des Lösehebels 10 selbst bei einem hohen Kraftaufwand, der für die Lösestellung unter Umständen erforderlich ist.

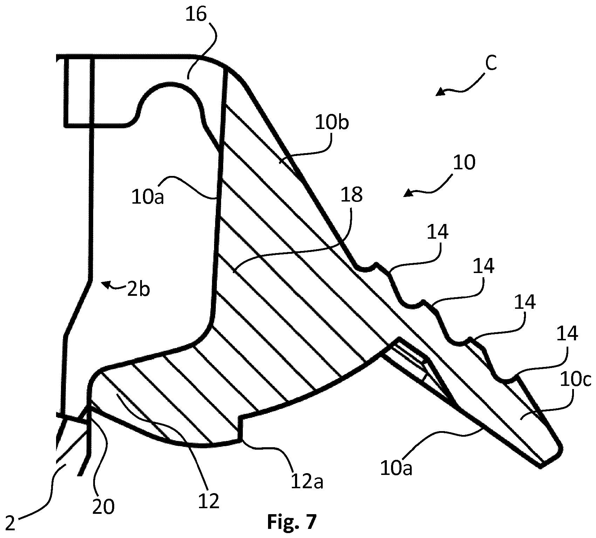

In einer weiteren bevorzugten Ausführung des Lösehebels 10 des Sockelteils 2 weist der Lösehebel 10, wie in Figur 7 dargestellt, auf seiner flächigen, vom Sockelteil 2 abgewandten Oberseite vorzugsweise mehrere in Querrichtung zur Montagerichtung M verlaufende, beabstandete Vorsprünge 14 als Riffelung auf. In einer besonderen Ausführungsvariante liegt der Abstand der Vorsprünge 14 im Bereich von 1 bis 3 mm und die Höhe der Vorsprünge im Bereich von 0,5 bis 2 mm wobei die Vorsprünge im Teil zwischen Dorn 12 und freiem Ende des Lösehebels 10 liegen. Durch diese vorteilhafte Ausbildung wird ein Abrutschen der Betätigungsmittel, z. B. Finger, auch bei auftretendem Schweiß oder dem Gebrauch von Handschuhen verhindert und dadurch die Betätigung in Sachen Handhabung und Arbeitssicherheit verbessert.

Weiterhin hat diese Variante den Vorteil, dass durch die Riffelung der Lösehebel 10 auch mit einem spitzen Gegenstand, wie z. B. einem Schraubendreher, betätigt werden kann. Damit ist eine universelle Betätigung möglich.

Gemäß einer optionalen Ausführung weist der Lösehebel 10 vorteilhaft zwei Schenkel 10b,10c auf. Diese Ausführung ist insbesondere in Figur 7 verbildlicht. Dabei erstreckt sich, wie in den Figuren 2 bis 4 dargestellt, der erste Schenkel 10b vom Dorn 12 in Richtung Verbindung mit dem Sockelteil 2, die zur Befestigung des Lösehebels 10 an der Außenwand 2a des Sockelteils 2 dienen, und der zweite Schenkel 10c erstreckt sich vom Dorn 12 in Richtung unbefestigtes freies Ende des Lösehebels 10. Beide Schenkel 10b,10c sind im Bereich des Dorns 12 zueinander insbesondere in einem Winkel von 5° bis 20° angeordnet und der zweite Schenkel 10c ist von der Außenwand 2a des Sockelteils 2 weg gerichtet. Praktischerweise ist ein vollständiges Eindrücken des Dorns 12 möglich, ohne dass der Lösehebel 10 bei hohen Kraftaufwand der Betätigung bricht. Weiterhin ist es möglich, das Winkelverhältnis der Schenkel 10b, 10c so anzupassen, dass insbesondere der zweite Schenkel 10c in Lösestellung parallel zur Außenwand 2a des Sockelteils 2 verläuft und in einer besonders vorteilhaften Ausführung in Lösestellung an dieser anliegt.

Für eine vereinfachte Herstellung sind der Lösehebel 10 und das Sockelteil 2 einstückig geformt. Der Lösehebel 10 und das Sockelteil 2, wie sie in Figur 1 dargestellt sind, sind gemäß der Erfindung ausgeführt. Gegenüber einer Montage von mehrstückigen Bauteilen stellt die Ausführung eine erhebliche Zeitersparnis und eine Aufwandsersparnis bei der Herstellung und Montage dar.

Besonders vorteilhaft für einen effizienten Herstellungsprozess liegt in einer vorteilhaften Variante der Erfindung, wenn sich die Ausnehmung 2b in der Außenwand 2a des Sockelteils 2 insbesondere vom freien Ende des Dorns 12 bis einschließlich zum Rand der Außenwand 2a erstreckt. Besonders gut ist die Ausführung, bei welcher sich die Ausnehmung 2b bis zum Rand der Außenwand 2a erstreckt und entgegen der Montagerichtung geöffnet ist.

Ebenfalls vorteilhaft für den Herstellungsprozess ist gemäß einer weiteren bevorzugten Ausführung der Erfindung, wenn der Lösehebel 10, wie in Figur 1 dargestellt, an der Außenwand 2a des Sockelteils 2 insbesondere mit zwei seitlich an einem Teil der Ausnehmung 2b angeordneten, elastisch verformbaren Stegen 16 verbunden ist. Vorzugsweise erstreckt sich die Ausnehmung 2b in der Außenwand 2a zwischen zwei Stegen 16 eines Lösehebels 10. Das hat den Vorteil, dass die Fertigung, insbesondere mittels Spritzgießens, verbessert wird, indem der Zugang zum Dorn 12 vereinfacht wird.

Eine weitere optionale Ausführung des Sockelteils 2 ist in der Figur 7 dargestellt. Dabei ist der Dorn 12 vorteilhaft auf einer über die Unterseite 10a des Lösehebels 10 verlaufenden Rampe 18 angeordnet. Besonders vorteilhaft ist die Rampe 18 in Montagerichtung M zur Außenwand 2a parallel oder vorzugsweise hin zur Außenwand 2a mit schrägen Winkel verläuft. Insbesondere die vergrößerte Darstellung des Lösehebels 10 gemäß Figur 7 zeigt die vorteilhafte Gestaltung des Lösehebels 10 mit einer Rampe 18, wobei die Rampe 18 in einem vorteilhaften Winkel hin zur Außenwand 2a verläuft. Vorteilhaft wird der Dorn 12 rückseitig von dem Lösehebel 10 durch die durch die Rampe 18 erzeugte Verbindung gestützt. Gemäß einer vorteilhaften Variante des Sockelteils 2 ist in einer Werksstellung, wie es die Figuren 4 und 7 darstellen, der Lösehebel 10 so angeordnet, dass der Dorn 12 des Lösehebels 10 über eine Sollbruchstelle 20 mit einem Teil des Randes der Ausnehmung 2b in der Außenwand 2a des Sockelteils 2 verbunden, wobei der Lösehebel 10 in der Werksstellung nach einem erstmaligen Eindrücken des Lösehebels 10 in die Grundstellung übergeht. Diese Ausführung ist besonders deutlich in der vergrößerten Ansicht des Bereichs C von Figur 4 gemäß Figur 7 dargestellt. Das hat den Vorteil, dass der Lösehebel vor der Montage, d. h. während der Lagerung in einer vorbestimmten Position, gehalten wird.

### Bezugszeichenliste

- 1: Elektroinstallationsgerät
- 2: Sockelteil
- 2a: Außenwand des Sockelteils
- 2b: Ausnehmung in der Außenwand
- 3: Sockeloberteil
- 3a: Tragring
- 3b: Krallengarage
- 4: Aufnahme für Kontaktgehäuse
- 5: Spalt
- 6: Kontaktgehäuse
- 8: Klemmfeder
- 10: Lösehebel
- 10a: Unterseite Lösehebel
- 10b: Erster Schenkel
- 10c: Zweiter Schenkel
- 12: Dorn
- 12a: Rastansatz
- 14: Vorsprünge
- 16: Stege
- 18: Rampe
- 20: Sollbruchstelle

- M: Montagerichtung

## Patentansprüche

1. Elektroinstallationsgerät (1) wie Schalter oder Taster, zur Montage in eine Einbauöffnung entlang einer Montagerichtung (M), aufweisend mindestens ein Sockelteil (2) mit mindestens einer Aufnahme (4), in der ein Kontaktgehäuse (6) angeordnet ist, wobei das Kontaktgehäuse (6) eine Klemmfeder (8) zum Einklemmen mindestens einer elektrischen Leitung aufweist, wobei ein schwenkbarer Lösehebel (10) außerhalb einer Außenwand (2a) des Sockelteils (2), die parallel zur
Montagerichtung (M) im Bereich der Aufnahme (4) verläuft, angeordnet ist, wobei in einer Grundstellung des Lösehebels (10) eine in das Kontaktgehäuse (6) eingeführte elektrische Leitung mit der Klemmfeder (8) des Kontaktgehäuses (6) fixiert wird, wobei in einer Lösestellung des Lösehebels (10) die Klemmfeder (8) betätigt wird und den elektrischen Leiter freigibt, wobei der Lösehebel (10) auf einer der Außenwand (2a) des Sockelteils (2) zugewandten Unterseite (10a) einen Dorn (12) aufweist, wobei im Bereich des Dorns (12) eine Ausnehmung (2b) in der Außenwand (2a) angeordnet ist, wobei der Dorn (12), die Ausnehmung (2b), das Kontaktgehäuse (6) und die Klemmfeder (8) so angeordnet sind, dass in der Lösestellung des Lösehebels (10) der Dorn (12) durch die Ausnehmung (2b) die Klemmfeder (8) des Kontaktgehäuses (6) zur Freigabe des elektrischen Leiters betätigt,
**dadurch gekennzeichnet, dass**
der Lösehebel (10) und das Sockelteil (2) einstückig geformt sind und
der Dorn (12) einen vom Dorn (12) abstehenden Rastansatz (12a) aufweist, wobei sich der Rastansatz (12a) in der Grundstellung ohne eingeführten elektrischen Leiter innerhalb des Sockelteils (2) befindet und mit einem Teil des Randes der Außenwand (2a) im Bereich der Ausnehmung (2b) rastend in Wirkverbindung steht, wobei die Wirkverbindung ein Austreten des Rastansatzes (12a) aus dem Sockelteil (2) verhindert.

2. Elektroinstallationsgerät (1) nach Anspruch 1,
**dadurch gekennzeichnet, dass**
in der Lösestellung mindestens ein Teil der Unterseite (10a) des Lösehebels (10), der sich vom Dorn (12) zum freien Ende erstreckt, zur Außenwand (2a) des Sockelteils (2) flächig parallel verläuft.

3. Elektroinstallationsgerät (1) nach Anspruch 1 oder 2,
**dadurch gekennzeichnet, dass**
der Lösehebel (10) auf seiner flächigen, vom Sockelteil (2) abgewandten Oberseite mehrere in Querrichtung zur Montagerichtung (M) verlaufende, beabstandete Vorsprünge (14) als Riffelung aufweist.

4. Elektroinstallationsgerät (1) nach Anspruch 3,
**dadurch gekennzeichnet, dass**
der Abstand der Vorsprünge (14) im Bereich von 1 bis 3 mm und die Höhe der Vorsprünge im Bereich von 0,5 bis 2 mm liegt, und die Vorsprünge im Teil zwischen Dorn (12) und freiem Ende des Lösehebels (10) liegen.

5. Elektroinstallationsgerät (1) nach einem der Ansprüche 1 bis 4,
**dadurch gekennzeichnet, dass**
der Lösehebel (10) zwei Schenkel (10b,10c) aufweist, wobei sich der erste Schenkel (10b) vom Dorn (12) in Richtung Verbindung mit dem Sockelteil (2), das zur Befestigung des Lösehebels (10) an der Außenwand (2a) des Sockelteils (2) dient, erstreckt und sich der zweite Schenkel (10c) vom Dorn (12) in Richtung unbefestigtes Ende des Lösehebels (10) erstreckt und beide Schenkel (10b,10c) im Bereich des Dorns (12) zueinander in einem Winkel von 5° bis 20° angeordnet sind und der zweite Schenkel (10c) von der Außenwand (2a) des Sockelteils (2) weg gerichtet ist.

6. Elektroinstallationsgerät (1) nach einem der Ansprüche 1 bis 5,
**dadurch gekennzeichnet, dass**
sich die Ausnehmung (2b) in der Außenwand (2a) des Sockelteils (2) vom Dorn (12) bis einschließlich zum Rand der Außenwand (2a) erstreckt.

7. Elektroinstallationsgerät (1) nach einem der Ansprüche 1 bis 6,
**dadurch gekennzeichnet, dass**
der Lösehebel (10) an der Außenwand (2a) des Sockelteils (2) mit zwei seitlich an einem Teil der Ausnehmung (2b) angeordneten, elastisch verformbaren Stegen (16) verbunden ist.

8. Elektroinstallationsgerät (1) nach einem der Ansprüche 1 bis 7,
**dadurch gekennzeichnet, dass**
der Dorn (12) auf einer über die Unterseite (10a) des Lösehebels (10) verlaufenden Rampe (18) angeordnet ist.

9. Elektroinstallationsgerät (1) nach Anspruch 8,
**dadurch gekennzeichnet, dass** die Rampe (18) in Montagerichtung (M) zur Außenwand (2a) parallel oder vorzugsweise hin zur Außenwand (2a) mit schrägen Winkel verläuft.

10. Elektroinstallationsgerät (1) nach einem der Ansprüche 1 bis 9,
**dadurch gekennzeichnet, dass**
in einer Werksstellung der Lösehebel (10) so angeordnet ist, dass der Dorn (12) des Lösehebels (10) über eine Sollbruchstelle (20) mit einem Teil des Randes der Ausnehmung (2b) in der Außenwand (2a) des Sockelteils (2) verbunden ist, wobei der Lösehebel (10) in der Werksstellung nach einem erstmaligen Eindrücken des Lösehebels (10) in die Grundstellung übergeht.

## Claims

1. Electric installation device (1), such as a switch or button, for mounting in an installation opening along a mounting direction (M), having at least one base part (2) with at least one receptacle (4) in which a contact housing (6) is arranged, wherein the contact housing (6) has a clamping spring (8) to allow at least one electrical wire to be clamped in, wherein a pivotable release lever (10) is arranged outside an outer wall (2a) of the base part (2) that extends parallel to the mounting direction (M) in the region of the receptable (4), wherein, in a basic position of the release lever (10), an electrical line introduced into the contact housing (6) is fixed by the clamping spring (8) of the contact housing (6), wherein, in a release position of the release lever (10), the clamping spring (8) is actuated and frees the electrical wire, wherein the release lever (10) has a plug (12) on an underside (10a) which faces the outer wall (2a) of the base part (2), wherein a cutout (2b) in the outer wall (2a) is arranged in the region of the plug (12), wherein the plug (12), the cutout (2b), the contact housing (6) and the clamping spring (8) are arranged in such a way that, in the released position of the release lever (10), the plug (12) actuates the clamping spring (8) of the contact housing (6) through the cutout (2b) to free the electrical wire,
**characterized in that**
the release lever (10) and the base part (2) are formed in one piece, and the plug (12) has a latching extension (12a) projecting from the plug (12), wherein, in the basic position without an electrical wire introduced, the latching extension (12a) is situated within the base part (2) and is in latching operative connection with a part of the edge of the outer wall (2a) in the region of the cutout (2b), wherein the operative connection prevents the latching extension (12a) from coming out of the base part (2).

2. Electric installation device (1) according to Claim 1,
**characterized in that**
in the release position, at least part of the underside (10a) of the release lever (10) that extends from the plug (12) to the free end runs plane-parallel to the outer wall (2a) of the base part (2).

3. Electric installation device (1) according to Claim 1 or 2,
**characterized in that**
the release lever (10) has, on its planar upper side facing away from the base part (2), a plurality of spaced-apart projections (14), as fluting, running in the traverse direction with respect to the mounting direction (M).

4. Electric installation device (1) according to Claim 3,
**characterized in that**
the spacing between the projections (14) lies in the range from 1 to 3 mm, and the height of the projections lies in the range from 0.5 to 2 mm, and the projections are situated in the part between the plug (12) and free end of the release lever (10).

5. Electric installation device (1) according to one of Claims 1 to 4,
**characterized in that**
the release lever (10) has two legs (10b, 10c), wherein the first leg (10b) extends from the plug (12) in the direction of the connection with the base part (2) which serves to fasten the release lever (10) to the outer wall (2a) of the base part (2), and the second leg (10c) extends from the plug (12) in the direction of the unfastened end of the release lever (10), and the two legs (10b, 10c) are arranged at an angle of 5° to 20° to one another in the region of the plug (12), and the second leg (10c) is directed away from the outer wall (2a) of the base part (2).

6. Electric installation device (1) according to one of Claims 1 to 5,
**characterized in that**
the cutout (2b) in the outer wall (2a) of the base part (2) extends from the plug (12) up to and including the edge of the outer wall (2a).

7. Electric installation device (1) according to one of Claims 1 to 6,
**characterized in that**
the release lever (10) is connected to the outer wall (2a) of the base part (2) by two elastically deformable webs (16) which are arranged laterally on a part of the cutout (2b).

8. Electric installation device (1) according to one of Claims 1 to 7,
**characterized in that**
the plug (12) is arranged on a ramp (18) running over the underside (10a) of the release lever (10).

9. Electric installation device (1) according to Claim 8,
**characterized in that,** in the mounting direction (M), the ramp (18) runs parallel to the outer wall (2a) or preferably runs towards the outer wall (2a) at an oblique angle.

10. Electric installation device (1) according to one of Claims 1 to 9,
**characterized in that,**
in a factory position, the release lever (10) is arranged in such a way that the plug (12) of the release lever (10) is connected via a predetermined breaking point (20) to a part of the edge of the cutout (2b) in the outer wall (2a) of the base part (2), wherein, in the factory position, the release lever (10) transitions into the basic position after the release lever (10) has been pressed in for the first time.

## Revendications

1. Appareil d'installation électrique (1) tel que commutateur ou bouton-poussoir, destiné à être monté dans une ouverture d'encastrement le long d'une direction de montage (M), comprenant au moins une partie socle (2) munie d'au moins un logement (4), dans lequel un boîtier de contact (6) est agencé, le boîtier de contact (6) comprenant un ressort de serrage (8) pour le serrage d'au moins un câble électrique, un levier de dégagement pivotant (10) étant agencé à l'extérieur d'une paroi extérieure (2a) de la partie socle (2), qui est parallèle à la direction de montage (M) dans la zone du logement (4) ; dans une position de base du levier de dégagement (10), un câble électrique introduit dans le boîtier de contact (6) étant fixé avec le ressort de serrage (8) du boîtier de contact (6) ; dans une position de dégagement du levier de dégagement (10), le ressort de serrage (8) étant actionné et libérant le conducteur électrique, le levier de dégagement (10) comprenant un mandrin (12) sur un côté inférieur (10a) tourné vers la paroi extérieure (2a) de la partie socle (2), un évidement (2b) étant agencé dans la paroi extérieure (2a) dans la zone du mandrin (12), le mandrin (12), l'évidement (2b), le boîtier de contact (6) et le ressort de serrage (8) étant agencés de telle sorte que, dans la position de dégagement du levier de dégagement (10), le mandrin (12) actionne au travers de l'évidement (2b) le ressort de serrage (8) du boîtier de contact (6) pour la libération du conducteur électrique,
**caractérisé en ce que**
le levier de dégagement (10) et la partie socle (2) sont formés d'un seul tenant et le mandrin (12) comprend un épaulement d'encliquetage (12a) dépassant du mandrin (12), l'épaulement d'encliquetage (12a) se trouvant dans la position de base sans conducteur électrique introduit à l'intérieur de la partie socle (2) et étant en liaison fonctionnelle par encliquetage avec une partie du bord de la paroi extérieure (2a) dans la zone de l'évidement (2b), la liaison fonctionnelle empêchant une sortie de l'épaulement d'encliquetage (12a) de la partie socle (2).

2. Appareil d'installation électrique (1) selon la revendication 1, **caractérisé en ce que,** dans la position de dégagement, au moins une partie du côté inférieur (10a) du levier de dégagement (10), qui s'étend à partir du mandrin (12) jusqu'à l'extrémité libre, est parallèle de manière plane à la paroi extérieure (2a) de la partie socle (2).

3. Appareil d'installation électrique (1) selon la revendication 1 ou 2, **caractérisé en ce que** le levier de dégagement (10) comprend sur son côté supérieur plan, détourné de la partie socle (2), plusieurs saillies écartées (14), s'étendant dans la direction transversale par rapport à la direction de montage (M), en tant que cannelure.

4. Appareil d'installation électrique (1) selon la revendication 3, **caractérisé en ce que** l'écart des saillies (14) se situe dans la plage allant de 1 à 3 mm et la hauteur des saillies dans la plage allant de 0,5 à 2 mm, et les saillies se situent dans la partie entre le mandrin (12) et l'extrémité libre du levier de dégagement (10).

5. Appareil d'installation électrique (1) selon l'une quelconque des revendications 1 à 4, **caractérisé en ce que** le levier de dégagement (10) comprend deux branches (10b, 10c), la première branche (10b) s'étendant à partir du mandrin (12) dans la direction de la liaison avec la partie socle (2), qui sert à l'immobilisation du levier de dégagement (10) sur la paroi extérieure (2a) de la partie socle (2), et la deuxième branche (10c) s'étendant à partir du mandrin (12) dans la direction de l'extrémité non immobilisée du levier de dégagement (10) et les deux branches (10b, 10c) étant agencées dans la zone du mandrin (12) à un angle de 5° à 20° l'une par rapport à l'autre, et la deuxième branche (10c) étant dirigée à distance de la paroi extérieure (2a) de la partie socle (2).

6. Appareil d'installation électrique (1) selon l'une quelconque des revendications 1 à 5, **caractérisé en ce que** l'évidement (2b) dans la paroi extérieure (2a) de la partie socle (2) s'étend à partir du mandrin (12) jusqu'au bord de la paroi extérieure (2a) inclus.

7. Appareil d'installation électrique (1) selon l'une quelconque des revendications 1 à 6, **caractérisé en ce que** le levier de dégagement (10) est relié sur la paroi extérieure (2a) de la partie socle (2) avec deux traverses (16) élastiquement déformables, agencées latéralement sur une partie de l'évidement (2b).

8. Appareil d'installation électrique (1) selon l'une quelconque des revendications 1 à 7, **caractérisé en ce que** le mandrin (12) est agencé sur une rampe (18) s'étendant au-dessus du côté inférieur (10a) du levier de dégagement (10).

9. Appareil d'installation électrique (1) selon la revendication 8, **caractérisé en ce que** la rampe (18) s'étend dans la direction de montage (M) jusqu'à la paroi extérieure (2a) parallèlement ou de préférence jusqu'à la paroi extérieure (2a) avec un angle oblique.

10. Appareil d'installation électrique (1) selon l'une quelconque des revendications 1 à 9, **caractérisé en ce que,** dans une position de fabrication, le levier de dégagement (10) est agencé de telle sorte que le mandrin (12) du levier de dégagement (10) soit relié par l'intermédiaire d'un emplacement de rupture privilégié (20) avec une partie du bord de l'évidement (2b) dans la paroi extérieure (2a) de la partie socle (2), le levier de dégagement (10) dans la position de fabrication passant dans la position de base après un premier enfoncement du levier de dégagement (10).
